Europäisches Patentamt

European Patent Office

Office européen des brevets

(11) Publication number: **0 420 533 A2**

## EUROPEAN PATENT APPLICATION

(21) Application number: 90310401.6

(22) Date of filing: 24.09.90

(51) Int. Cl.5: **G11B 5/84**, G11B 5/85, G11B 5/72

(30) Priority: 26.09.89 JP 249541/89

(43) Date of publication of application:
03.04.91 Bulletin 91/14

(84) Designated Contracting States:
DE FR GB

(71) Applicant: MATSUSHITA ELECTRIC
INDUSTRIAL CO., LTD.
1006, Kadoma
Kadoma-shi, Osaka-fu 571(JP)

(72) Inventor: Takahashi, Kiyoshi
2-1-14, Ayukawa
Ibaraki-shi, Osaka-fu 567(JP)
Inventor: Murai, Mikio
2-10-32, Tsudahigashimachi
Hirakata-shi, Osaka-fu 573-01(JP)
Inventor: Odagiri, Masaru
2-2-46, Seiwadainishi
Kawanishi-shi, Hyogo-ken, 666-01(JP)

(74) Representative: Crawford, Andrew Birkby et al
A.A. THORNTON & CO. Northumberland
House 303-306 High Holborn
London WC1V 7LE(GB)

(54) Manufacturing method and manufacturing apparatus of magnetic recording medium.

(57) A manufacturing apparatus for forming an oxidation layer by vacuum processing method and forming a lubrication layer immediately afterwards in a same vacuum chamber by vacuum deposition method, comprises a conveying device for conveying the magnetic recording medium having the protect layer formed on the ferromagnetic metal thin film, along a predetermined conveying route, a vacuum deposition device for forming the lubrication layer installed on the conveying route, and an oxidation layer forming device disposed immediately before the vacuum deposition device on the conveying route.

EP 0 420 533 A2

# MANUFACTURING METHOD AND MANUFACTURING APPARATUS OF MAGNETIC RECORDING MEDIUM

## BACKGROUND OF THE INVENTION

### 1. Field of the Invention

The present invention relates to a metal thin film magnetic recording medium, and more particularly to a manufacturing method and a manufacturing apparatus of a magnetic recording medium capable of making the most of the performance of protect layer and lubrication layer disposed in order to enhance the practical performance after forming a magnetic layer.

### 2. Description of the Prior Art

Conventionally is known a ferromagnetic metal magnetic recording medium, forming Co, Ni, Fe or their alloy, on a substrate composed of polyester film, polyimide film or other macromolecular film or nonmagnetic metal or the like, by vacuum film forming method, such as vacuum deposition, sputtering and ion plating method. In this recording medium, as compared with the prior coating type magnetic recording medium, the recording density can be enhanced dramatically. The conditions for such high recording density include, among others, minimization of recording and reproducing defects, minimization of spacing loss between magnetic head and magnetic recording medium, and practical durability. However, in the metal thin film magnetic recording medium, the metal thin film itself is extremely thin and poor in durability, and as for corrosion resistance, the metal thin film does corrode. To solve such problems, it is known to form a protect layer after forming the metal thin film, and form a lubrication layer as a top coat layer.

The manufacturing method of such conventional magnetic recording medium is described below.

A magnetic recording medium forming a ferromagnetic metal thin film layer on a nonmagnetic substrate is installed in a plasma CVD apparatus, and a protect layer is formed by the apparatus constituent elements such as reaction gas, plasma generation nozzle, electrode and power source. (See, for example, the Japanese patent publications Hei. 1-166329, Hei. 1-245429.) Or, right after forming the protect layer, an oxidation layer is formed thereon in the same vacuum chamber. (See the U.S. patent application 521-987, filed May 11, 1990.) The magnetic recording medium. forming the protect layer, or protect layer and oxidation layer in such manner is once detached from the plasma CVD apparatus or vacuum apparatus for formation of oxidation layer, and a lubrication layer is formed. In such conventional method, however, since the medium is once dismounted from the apparatus after formation of protect layer or protect layer and oxidation layer, bonding of lubricant onto a contaminated lubrication layer is weak. Therefore, when used as a video tape, the lubrication layer is scraped off by the head or other part, and the function of lubrication is lowered, and head clogging may be likely to occur. Or else, when the protect layer and oxidation layer is formed in a same vacuum chamber, although head clogging may be improved, the corrosion resistance is lowered, which brings about a major defects for the magnetic recording medium.

## SUMMARY OF THE INVENTION

It is hence a primary object of the invention to present a magnetic recording medium capable of reducing scraping of the lubrication layer by the head, reducing head clogging and improving the corrosion resistance, by firmly bonding when forming the lubrication layer after forming the protective film, and strengthening the bonding force with the lubricant after forming the protect layer in order to make the best of the function as lubricant, so as to solve the conventional problems.

To achieve the above object, the manufacturing method of magnetic recording medium of the invention comprises the steps of forming a ferromagnetic metal thin film on a nonmagnetic substrate, forming a protect layer thereon by plasma CVD method or the like to compose a magnetic recording medium, forming an oxidation layer by vacuum processing method, and immediately forming a lubrication layer by vacuum deposition method in the same vacuum bath. The manufacturing apparatus of magnetic recording medium of the invention comprises a conveying device for conveying a magnetic recording medium having a ferromagnetic metal thin film formed on a nonmagnetic substrate and also a protect layer formed thereon, a vacuum processing device for forming an oxidation layer, and a vacuum deposition device for a lubrication layer continuously in a same vacuum bath right after forming this oxidation layer, wherein the vacuum deposition device is installed behind the vacuum processing device for forming the oxidation layer, on the conveying device.

In this construction, by forming an oxidation layer on the protect - layer already formed on the magnetic recording medium by plasma CVD method or the like by - vacuum processing method, the deposit produced in the step of forming the protect layer and the contaminant absorbed when detached from the plasma CVD apparatus are degased by heating by the heat source or at the time of initial cleaning in the step of forming the oxidation layer. The formed oxidation layer reaches the deposition apparatus for forming the lubrication layer disposed right after in an active surface state Within the same vacuum chamber, and chemical bonding of protect layer and lubrication layer is promoted through this oxidation layer, so that a very tightly bound lubrication layer is formed. Therefore, scraping of the lubrication layer by the head is decreased, the head clogging is reduced, and the corrosion resistance is notably enhanced.

BRIEF DESCRIPTION OF THE DRAWINGS

Fig. 1 is a schematic diagram showing a manufacturing apparatus for forming an oxidation layer by plasma discharge method as a vacuum processing method on a protect layer as embodiment 1 of the invention;
Fig. 2 is a schematic diagram showing a manufacturing apparatus using a heat source, such as halogen lamp in vacuum processing as embodiment 2 of the invention;
Fig. 3 is a sectional view showing the composition of magnetic recording medium fabricated by the methods confirming to embodiment 1 and embodiment 2 of the invention, and prior examples 2 and 3; and
Fig. 4 is a sectional view showing the composition of magnetic recording medium fabricated by the method confirming to prior example 1.

DESCRIPTION OF THE PREFERRED EMBODIMENTS

Embodiment 1

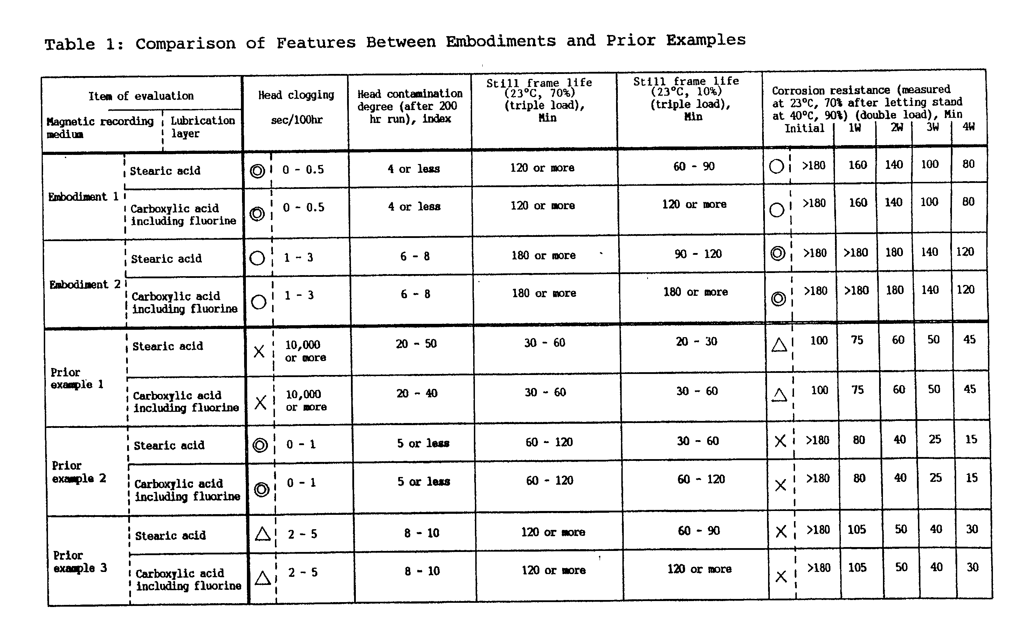

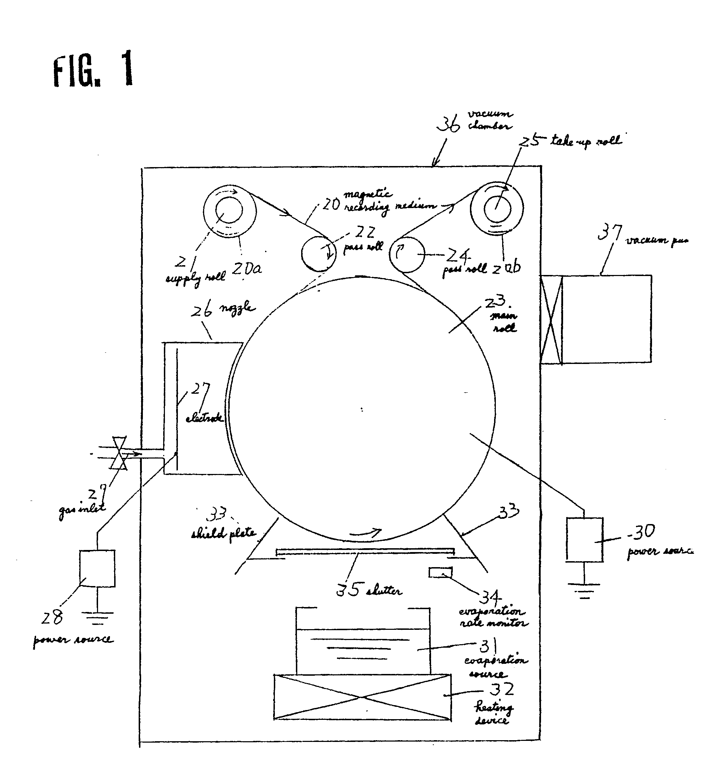

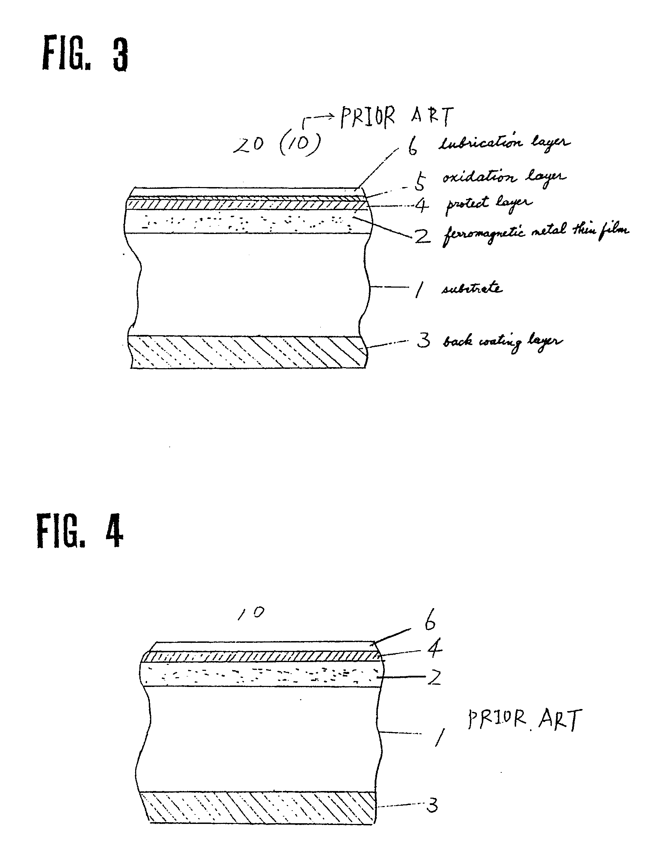

Fig. 1 shows the outline of apparatus composition in an embodiment of the invention. A basic structure of a magnetic recording medium (magnetic tape) 20 manufactured in this embodiment is shown in Fig. 3. On the surface of a polyester film nonmagnetic substrate 1 of 3 to 20 $\mu$m in thickness, a ferromagnetic metal thin film of Co-Ni alloy of 0.1 to 0.2 $\mu$m thick is formed by oblique incidence deposition. For the improvement of running performance, a back coating layer 3 made of resin and carbon is formed on the back surface of the substrate 1. On the ferromagnetic metal thin film 2, a protect layer 4 is formed, and an oxidation layer 5 and a lubrication layer 6 are further formed thereon.

In Fig. 1, reference number 20a denotes a magnetic recording medium having the protect layer 4 formed before formation of oxidation layer 5 and lubrication layer 6, and it is taken up on a supply roll 21, and is sent out under controlled tension. Numerals 22, 24 are pass rolls, which rotate in tight contact with the magnetic recording medium. Numeral 23 is a main roll, which is isolated from the main body, and a negative voltage is applied from a bias power source 30, while it is controlled to convey the magnetic recording medium 20 at a constant speed. Numeral 25 is a take-up roll, on which the magnetic recording medium 20 after forming the oxidation layer 5 and lubrication layer 6 is taken up under controlled tension same as in the supply roll 21. Numeral 26 is a plasma nozzle for forming the oxidation layer 5, and 27 is an electrode for generating plasma, which is connected to a power source 28 for plasma generation. As this power source 28 for plasma generation, DC voltage, AC voltage, radio frequency voltage or their superposed voltage may applied up to a maximum voltage of 7 KV. Numeral 29 is a gas inlet, from which gas including $O_2$, air CO and others for forming the oxidation layer 5 is introduced at a partial pressure of 0.3 to 0.001 Torr. Numeral 30 is a bias power source, which applies a voltage of DC -0.05 to -3 KV to the main roll 23.

Numeral 31 is an evaporation source, which is filled with lubricant such as fatty acid, fatty acid ester, and fatty acid amide. Numeral 32 is a heating device, which heats the lubricant charged as the evaporation source 31. The temperature of the lubricant is detected by a well-known sensor such as thermocouple, and this information is utilized in the control of heating temperature. Numeral 33 is a shield plate which prevents the evaporation particles of the lubricant from splashing and depositing on the undesired parts of the magnetic recording medium 20 in the vacuum chamber or constituent parts for conveying it.

Numeral 34 is a evaporation rate monitor for detecting the evaporation amount of the lubricant, of which information is utilized in control of temperature of the evaporation source 31, and also in start of deposition of the lubricant on the oxidation layer 5 by opening a shutter 35. Numeral 37 is a vacuum pump for evacuating a vacuum chamber 36.

The manufacturing method of the magnetic recording medium of embodiment 1 of the invention by the manufacturing method composed as described above is explained below while referring to Fig. 1.

In the first place, the vacuum bath 36 is evacuated by the vacuum pump 37. When reaching a specified degree of vacuum (up to 1 x 10⁻⁴ Torr), the magnetic recording medium 20a before formation of oxidation layer 5 and lubrication layer 6 is in contact with the main roll 23 to which a voltage is applied from the power source 30, at the back side of the ferromagnetic metal thin film 2, and is continuously sent out from the supply roll 21 toward the take-up roll 25.

The reaction gas introduced from the gas inlet 29 is transformed into plasma near the electrode 27 by the voltage applied from the power source 28 for plasma generation, and is accelerated toward the magnetic recording medium 20a, then reaches the protect layer 4 positioned opposite to the nozzle 26 for forming oxidation layer to oxidize the surface, thereby forming the oxidation layer 5. At this time, by the cleaning action due to the initial sputtering phenomenon, the contaminants on the protect layer 4 are removed. The magnetic recording medium 20 on which this oxidation layer 5 is formed is conveyed to the lubricant evaporation region directly in an active state, and a lubrication layer 6 is charged in a container as the for forming this lubrication layer 6 is charged in the evaporation source 31, and it is heated and melted by the heating device 32. When it is detected by the evaporation rate monitor 34 that the specified evaporation has been reached, the shutter 35 is released, and the lubrication layer 6 is formed on the protect layer 4. At this time, the magnetic recording medium 20 comprises a diamond-like carbon film of about 100 Å as protect layer 4, oxidation layer 5 of about 10 Å, and lubrication layer 6 of about 30 Å made of stearic acid.

Thus, by forming the lubrication layer 6 right after forming the oxidation layer 5 on the protect layer 4, the contaminant substances depositing on the surface when forming the protect layer 4 or when storing after forming are removed, and a clean surface is obtained, and also since the lubrication layer 6 is formed on the active oxidation layer 5, the chemical bond is promoted when forming the lubrication layer 6, so that a tightly bound lubrication layer 6 may be formed. As the magnetic recording medium 20, in practical performance, head clogging decreases, and the corrosion resistance increases notably.

As the lubrication layer 6, when carboxylic acid including fluorine is used, as compared with the case of using stearic acid, the still frame life in low humidity environment is enhanced. (Where still frame life represents a guaranteed time of operation on a stop picture motion.)

Embodiment 2

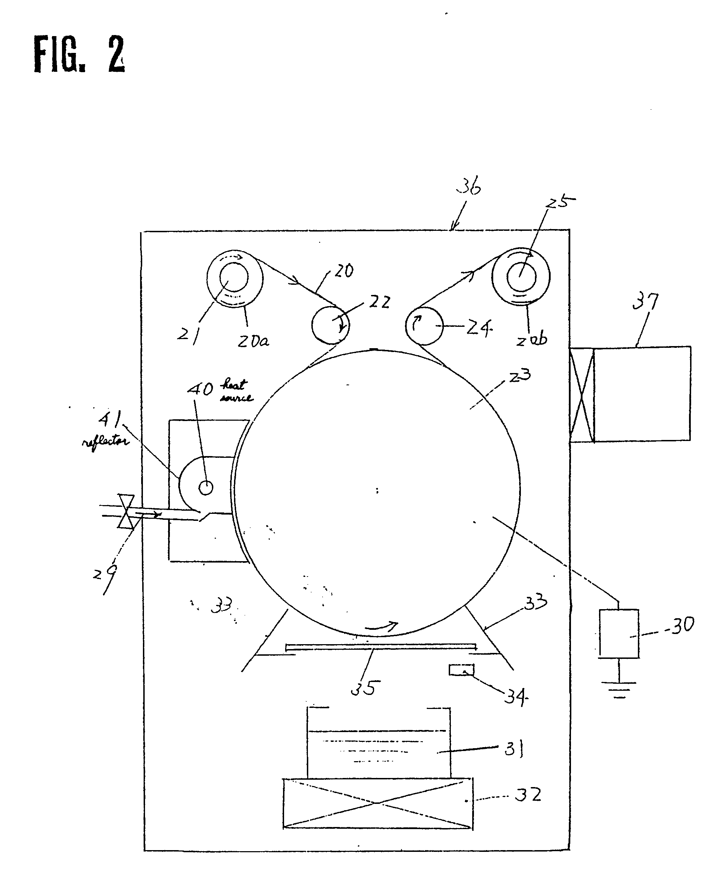

As the vacuum processing method for forming the oxidation layer 5, as heat source such as halogen lamp is used in the second embodiment, which is described below while referring to Fig. 2.

What is different between the manufacturing apparatus of this embodiment shown in Fig. 2 and that of embodiment 1 is as follows: as the vacuum processing apparatus for forming the oxidation layer 5, in order to form the oxidation layer 5 by heat source, instead of the electrode 27 for generating plasma, a heat source 40 such as halogen lamp and infrared ray heater, and a reflector 41 for focusing its heat are disposed. The other constitution is sane as that of embodiment 1, and the corresponding constituent elements are identified with same reference numbers, and detailed descriptions are omitted.

The magnetic recording medium 20a forming the protect layer 4 before formation of the oxidation layer 5 and lubrication layer 6 is sent out from the supply roll 21, and is conveyed in tight contact with the main roll 23. When the magnetic recording medium 20a reaches the position opposite to the nozzle 26, heat source 40 and reflector 41 in the forming region of oxidation layer 5, it is heated by the heat source 40 such as halogen lamp provided with the reflector 41 together with the gas introduced from the gas inlet 29, and the oxidation layer 5 is formed on the protect layer 4. The magnetic recording medium 20 forming this oxidation film 5 is conveyed into the forming region of lubrication layer 6, and the lubrication layer 6 is formed exactly in the same manner as in embodiment 1. In the case of this embodiment, the lubrication layer 6 can be formed tightly right after forming the oxidation layer 5 without giving any damage at all to the protect layer 4. At this time, the protect layer 4, oxidation layer 5 and lubrication layer 6 were formed exactly in the same thickness as in embodiment 1.

Thus, the magnetic recording medium 20 manufacturing in the method of this embodiment is completely free from damage due to ion current of plasma into the protect layer 4 when forming the oxidation layer 5, and is effective to release gas by heat, and therefore release of contaminants from inside when letting stand in the atmosphere of high temperature and high humidity is decreased, so that the still frame life and corrosion resistance are particularly enhanced.

Meanwhile, when carboxylic acid including fluorine is used as the lubrication layer 6, in addition to the enhancement of corrosion resistance, the still frame life in the low humidity environment is improved.

Effects of the foregoing embodiments are explained by referring to Table 1.

Table 1 shows the degree of head clogging and head contamination, still frame life, also still frame life in low humidity climate, and corrosion resistance, by evaluating the practical performance of the magnetic recording media 20, 10 manufactured according to the methods of this invention (20) and prior art (10), by using a video tape recorder.

For comparison, three prior examples are presented; that is, in prior example 1, after forming protect layer without forming oxidation layer, lubrication layer is disposed; in prior example 2, after continuous forming of protect layer 4 and oxidation layer by plasma discharge method, lubrication layer 6 is formed by other device; and in prior example 3, it is different from prior example 2 only in that oxidation layer 5 is formed by heat source. As the lubrication layer 6 in these prior examples, same as in the foregoing embodiments 1, 2, the magnetic recording medium 10 made of stearic acid or carboxylic acid including fluorine was used.

The method of evaluation of practical performance is explained below.

As the practical evaluation method of degree of head clogging and head contamination, the magnetic recording media 10, 20 cut to a width of 8 mm were caused to run at a speed of 14 mm/sec for about 90 minutes, and using a rotary cylinder type video tape recorder of 40 mm in outside diameter mounting two pairs of head with the relative speed of 3.8 m/sec, track width of about 20 $\mu$m, and projection of 30 $\mu$m, video signals were recorded in the environments of 23°C, 70% RH, and the sum of head clogging time of reproducing for about 200 hours was converted into the value for 100 hours. The head clogging time is defined as the continuous duration when lowering of reproduction output of 6 dB or more continues over a finite time. The head contamination degree is the exponential expression of the depositing and staying amount of lubricant, back coating layer 3 or the like scraped off from the magnetic recording media 10, 20 on the head surface or its surroundings, and the smaller value indicates the smaller degree of contamination.

To measure the still frame life, using the same video tape recorder, by recording in the environments of 23°C and 70%, a load about 3 times as high as in ordinary traveling is applied, and the effects are measured in the environments of 23°C, 70%, and 23°C, 10%. It is regarded as the end of the life when no output is delivered as the flaw penetrates into the ferromagnetic metal thin film of the magnetic recording media 10, 20.

As for corrosion resistance, the magnetic recording media 10, 20 recorded by using the sane video tape recorder as in still frame life measurement were directly let stand in the environments of 40°C, 90%, and the still frame life was loaded with about a double load every week, and the effects were measured in the environments of 23°C, 70%. In Table 1, . weekly measurements are recorded. In Table 1, the symbols ⓞ, o, Δ, and X denoting the results of evaluation of head clogging and corrosion resistance are defined as follows: in the case of head clogging, ⓞ for 0 to 1, o for 1 to 3, Δ for 3 to 10, and X for 10 or more; and in the case of corrosion resistance, ⓞ for the initial value of 90 minutes or more and 4-week value of 90 or more, o for 90 to 60, Δ for 60 to 45, and X for 45 or less.

It is known from Table 1 that the degree of head clogging and head contamination is reduced in both embodiments 1 and 2, greatly as compared with prior example 1, and to about half in prior examples 2 and 3, and a marked effect was observed. As for the still frame life and corrosion resistance, embodiment 2 is superior. In particular, the corrosion resistance was lower in prior examples 2, 3 than in prior example 1, and this point was significantly improved. The still frame life in low humidity environment was better, whether in embodiments or prior example, when carbovylic acid including fluorine was used.

Considering from these results, by forming the oxidation layer 5 on the protect layer 4 by vacuum processing method and forming the lubrication layer 6 right after, the contaminants on the protect layer 4 are removed, and an active and clean oxidation layer is obtained, so that a tight chemical bond with the lubrication layer 6 is obtained. The synergistic effects of the protect layer 4 and lubrication layer 6 appear markedly, and the lubricant is not scraped off by the head or other part by repeated traveling, and stable traveling is maintained for a long period, and hence head clogging and head contamination are reduced. In embodiment 2, meanwhile, in particular, since the internal contaminants are released by that, release of contaminants while letting stand at high temperature and high humidity becomes less, and damage by ion current of plasma on the protect layer 4 does not occur, and hence the corrosion resistance and still frame life are improved. Moreover, by using carboxylic acid including fluorine as the lubrication layer 6, the friction coefficient is lowered even in the atmosphere of low humidity, and it slides with the head in a stable state, which contributes to further improvement of the still frame life.

In both embodiments 1 and 2, the oxidation layer forming apparatus and lubrication layer forming apparatus are disposed at opposite positions of one main roll 23, but same effects are substantially obtained if they are disposed at different positions not opposite to the main roll 23, for example, between the supply roll 21 and the pass roll 22. However, when installed at positions opposite to the main roll 23, heat dissipation to the roller due to contact is effected, and formation of cracks in the ferromagnetic metal thin film 2 is advantageously inhibited.

## Claims

1. A manufacturing method of magnetic recording medium comprising the steps of forming a ferromagnetic metal thin film on a nonmagnetic substrate, forming a protect layer thereon, forming an oxidation layer on the protect layer by vacuum processing method, and further forming a lubrication layer on the oxidation layer in the same vacuum chamber by vacuum deposition method.

2. A manufacturing method of magnetic recording medium according to claim 1, wherein the vacuum processing method is to form the oxidation layer on the protect layer by plasma discharge method using a material containing oxygen as reaction gas.

3. A manufacturing method of magnetic recording medium according to claim 1, wherein the vacuum processing method is to form the oxidation layer on the protect layer by a heat source such as halogen lamp and infrared ray heater, using a material containing oxygen as reaction gas.

4. A manufacturing apparatus of magnetic recording medium comprising a conveying device for conveying a magnetic recording medium having a ferromagnetic metal thin film formed on a nonmagnetic substrate and a protect layer formed thereon, along a predetermined conveying route, and a vacuum processing device for forming an oxidation layer and a vacuum deposition device for forming a lubrication layer, both disposed on the conveying route, wherein the vacuum processing device for forming the oxidation layer is installed immediately before the vacuum deposition device for forming the lubrication layer, on the conveying route.

5. A manufacturing apparatus of magnetic recording medium according to claim 4, wherein the vacuum processing device for forming the oxidation layer is a plasma discharge device.

6. A manufacturing apparatus of magnetic recording medium according to claim 4, wherein the vacuum processing device for forming the oxidation layer is a device using a heat source for oxidizing the surface of the protect layer.

# Table 1: Comparison of Features Between Embodiments and Prior Examples

| Item of evaluation | | Head clogging sec/100hr | | Head contamination degree (after 200 hr run), index | Still frame life (23°C, 70%) (triple load), Min | Still frame life (23°C, 10%) (triple load), Min | Corrosion resistance (measured at 23°C, 70% after letting stand at 40°C, 90%) (double load), Min | | | | | |
|---|---|---|---|---|---|---|---|---|---|---|---|---|
| Magnetic recording medium | Lubrication layer | | | | | | | Initial | 1W | 2W | 3W | 4W |
| Embodiment 1 | Stearic acid | ◎ | 0 – 0.5 | 4 or less | 120 or more | 60 – 90 | ○ | >180 | 160 | 140 | 100 | 80 |
| | Carboxylic acid including fluorine | ◎ | 0 – 0.5 | 4 or less | 120 or more | 120 or more | ○ | >180 | 160 | 140 | 100 | 80 |
| Embodiment 2 | Stearic acid | ○ | 1 – 3 | 6 – 8 | 180 or more | 90 – 120 | ◎ | >180 | >180 | 180 | 140 | 120 |
| | Carboxylic acid including fluorine | ○ | 1 – 3 | 6 – 8 | 180 or more | 180 or more | ◎ | >180 | >180 | 180 | 140 | 120 |
| Prior example 1 | Stearic acid | × | 10,000 or more | 20 – 50 | 30 – 60 | 20 – 30 | △ | 100 | 75 | 60 | 50 | 45 |
| | Carboxylic acid including fluorine | × | 10,000 or more | 20 – 40 | 30 – 60 | 30 – 60 | △ | 100 | 75 | 60 | 50 | 45 |
| Prior example 2 | Stearic acid | ◎ | 0 – 1 | 5 or less | 60 – 120 | 30 – 60 | × | >180 | 80 | 40 | 25 | 15 |
| | Carboxylic acid including fluorine | ◎ | 0 – 1 | 5 or less | 60 – 120 | 60 – 120 | × | >180 | 80 | 40 | 25 | 15 |
| Prior example 3 | Stearic acid | △ | 2 – 5 | 8 – 10 | 120 or more | 60 – 90 | × | >180 | 105 | 50 | 40 | 30 |
| | Carboxylic acid including fluorine | △ | 2 – 5 | 8 – 10 | 120 or more | 120 or more | × | >180 | 105 | 50 | 40 | 30 |

EP 0 420 533 A2

# FIG. 1

# FIG. 2

## FIG. 3

→ PRIOR ART

20 (10)

6     lubrication layer

5     oxidation layer

4     protect layer

2     ferromagnetic metal thin film

1     substrate

3     back coating layer

## FIG. 4

10

6

4

2

PRIOR ART

1

3